# EUROPEAN PATENT SPECIFICATION

(11) **EP 4 380 009 B1**
(45) Date of publication and mention of the grant of the patent: **30.09.2026**
(21) Application number: 22210866.4
(22) Date of filing: 01.12.2022
(51) Int. Cl.: H02K 1/32, H02K 9/19, H02K 9/08, H02K 3/24

(54) **RING-SHAPED END MEMBER FOR A ROTOR ASSEMBLY**
RINGFÖRMIGES ENDTEIL FÜR EINE ROTORANORDNUNG
ÉLÉMENT D´EXTRÉMITÉ EN FORME D´ANNEAU POUR UN ENSEMBLE DE ROTOR

(43) Date of publication of application: 05.06.2024
(73) Proprietor: VOLVO CAR CORPORATION, 405 31 Göteborg (SE)
(72) Inventor: BRUNBERG, Johan, 40531 Göteborg (SE); EHN, Joakim, 46198 Trollhättan (SE)
(74) Representative: Kransell & Wennborg KB

(56) References cited:
- DE-A1- 102012 220 239
- DE-A1- 102018 204 512
- DE-A1- 102020 215 450
- JP-B2- 3 650 351
- JP-B2- 4 867 598
- JP-U- S5 620 349
- US-A- 4 496 862
- US-A1- 2012 086 291

## Description

### TECHNICAL FIELD

The present disclosure relates to a ring-shaped end member for a rotor assembly, a rotor assembly comprising such ring-shaped end member and an electric machine comprising such rotor assembly.

### BACKGROUND ART

Electric machines are used in electric or hybrid vehicles as a traction motor. The traction motor in vehicles is conventionally configured to generate power for providing a wheel torque to propel the vehicle and to recover braking energy, if a regenerative braking system is used. Such electric machines may, however, produce significant heat inside them. For example, heat may be generated in an electric machine due to an electric resistance in electric current flowing through a rotor and/or stator, hysteresis losses due to changing magnetic fields and resistive heating of eddy currents caused by magnetic fields. Additionally, heat may be also generated due to mechanical friction among components in the electric machines.

In electric machines, however, thermal capacities of rotor magnets and stator windings affect available output power of the electric machines. The rotor magnets typically have a thermal limit of 150 °C and when temperature increases above the thermal limit, demagnetization may occur which reduces performance of the electric machines. The stator, which may comprise multiple copper wires, are insulated with a material, which has a temperature limit of 180 °C. If the temperature exceeds 180 °C, thermal fatigue cracks can occur which can cause shortcut and terminate the electric machines.

JP S56 20349 U describes a rotor having a rotor core with annular iron core pressers at both ends and at the outer circumference of the iron core. The iron core pressers and the rotor core are provided with a plurality of ventilation holes extending in the axial direction and, between the rotor core and the iron core pressers, a plurality of ventilation grooves are radially connected with each ventilation hole and open on the outer circumference of the iron core pressers. JP 4 867598B2 describes a cooling structure of a rotor comprising a plurality of electromagnetic steel plates, a permanent magnet embedded therein, an end plates provided at both the axial ends of the electromagnetic plate, and a groove extending in a radial direction of the end plate. JP 3 650351 B2 describes a cage/basket type/mold induction motor for rail vehicles comprising a motor frame having an air inlet at one end and an air outlet at another end, a stator supported in the motor frame and a rotor. The rotor comprises a rotor core, first and second support clampers and a cooling-air route arranged at the circumferential direction.

### SUMMARY

Hence, there may be a need to provide an improved rotor assembly, which may facilitate cooling of its components.

The problem is at least partially solved or alleviated by the subject matter of the independent claims of the present disclosure, wherein further examples are incorporated in the dependent claims. It should be noted that the aspects of the disclosure described in the following apply to the ring-shaped end member for a rotor assembly, the rotor assembly comprising such ring-shaped end member, and the electric machine comprising such rotor assembly, the vehicle comprising such electric machine, the manufacturing method for such ring-shaped end member and the manufacturing method for such rotor assembly.

According to the present disclosure, a ring-shaped end member for a rotor assembly is presented. The ring-shaped end member for a rotor assembly comprises a plurality of venting grooves, a plurality of venting openings, a front surface and a rear surface. Each venting groove extends from an interior to an outer circumference at the front surface, an inner end of the venting groove being arranged at the interior of the ring-shaped end member and comprises a venting aperture. The venting apertures extend from the front surface to the rear surface. Each venting opening extends from the front surface to the rear surface, and each venting opening extends from the front surface to the rear surface. The venting grooves and the venting openings are in fluid communication with ambient air. The venting openings are not directly connected to any venting grooves.

In an example, the venting grooves, venting apertures and the venting openings are arranged in a circumferential direction of the ring-shaped end member.

Such ring-shaped end member may facilitate an airflow throughout the rotor body, when the ring-shaped end member is arranged at a rotor assembly.

According to the present disclosure, a rotor assembly is also presented. The rotor assembly comprises a rotor body, a first ring-shaped end member and a second ring-shaped end member. The rotor body is formed in a cylinder shape comprising a through-hole extending in an axial direction of the rotor body, a solid material portion and at least one venting channel. The first ring-shaped end member is arranged at a first end portion of the rotor body. The second ring-shaped end member is arranged at a second end portion of the rotor body. The venting channel extends from the first end portion to the second end portion through the solid material portion of the rotor body. The first ring-shaped end member comprises at least one venting hole arranged substantially parallel to the axial direction of the rotor body. The second ring-shaped end member comprises at least one venting groove at a front surface of the second ring-shaped end member, wherein the front surface faces the rotor body. The venting groove extends from an interior of the second ring-shaped end member to an outer circumference of the second ring-shaped end member. The venting channel, the venting hole and the venting groove are connected to each other to form a venting duct for guiding airflow throughout the rotor body.

The rotor assembly according to the present disclosure facilitates direct cooling using oil-spray provided towards end-windings of the rotor assembly. Generally, when using an oil for direct cooling, an oil-splash may occur at the rotor assembly in a form of droplets, indirect spray and/or a finer oil-mist. The rotor assembly can be improved by modifying a design of already existing components of the assembly. Specifically, an airstream may be guided towards each end portions of the rotor assembly, which may prevent oil-contaminated air from introducing in an airgap between an outer surface of the rotor assembly and an inner stator surface and reduce or even eliminate friction losses inside the airgap, which may be smaller than 1 mm.

The rotor assembly may be arranged coaxially inside a stator assembly of an electric machine. Preferably, the rotor assembly may be adapted for direct cooling using oil. The rotor body formed in a cylinder shape may comprise a plurality of magnets arranged, for instance, in the solid material portion. The magnets may be permanent magnets and configured to rotate the rotor body due to electromagnetic energy. The rotor body may comprise a through-hole adapted to receive a cooling medium, such as an oil, which may be dispersed inside the rotor body. The through-hole may extend from a first end portion of the rotor body to the second end portion of the rotor body. In other words, the through-hole may extend in an elongated or axial direction of the rotor body such that the through-hole may be surrounded by the solid material portion of the rotor body.

The rotor body may further comprise one or more venting channels. The venting channel may extend substantially parallel to the axial direction of the rotor body in the solid material portion of the rotor body. In other words, the rotor body may comprise the through-hole extending in a center of the rotor body in its axial direction and the venting channel may be spaced apart from the through-hole and arranged substantially parallel to the through-hole. If the rotor body comprises more than one venting channels, the venting channels may be positioned encircling the through-hole. Preferably, a diameter of the through-hole may be bigger than a diameter of the venting channel. However, the diameter of the through-hole may be also smaller or same as the diameter of the venting channel.

The first ring-shaped end member and/or the second ring-shaped end member may be formed as a flange, which may be separately manufactured and attached to each end portion of the rotor body. The first ring-shaped end member and the second ring-shaped end member may be formed in a ring shape. The first ring-shaped end member and the second ring-shaped end member may be formed identically or differently from each other. The first ring-shaped end member and the second ring-shaped end member may be adapted to cover each end portion of the rotor body. An outer diameter of the first ring-shaped end member and an outer diameter of the second ring-shaped end member may be same or bigger than an outer diameter of the rotor body.

The first ring-shaped end member may comprise one or more venting holes, which may be formed in an axial direction of the first ring-shaped end member spaced apart from a center of the first ring-shaped end member. If the first ring-shaped end member comprises more than one venting holes, the venting holes may be spaced apart from each other in a circumferential direction of the first ring-shaped end member. The venting hole may extend substantially parallel to the axial direction of the rotor body extending from a front surface of the first ring-shaped end member facing the first end portion of the rotor body to a rear surface of the first ring-shaped end member facing away from the first end portion of the rotor body. Accordingly, the venting hole may be in fluid communication with ambient air.

The second ring-shaped end member may comprise one or more venting grooves, which may be formed only at one surface of the second ring-shaped end member such as the front surface, which may face the second end portion of the rotor body. An elongated direction of the venting groove may be substantially perpendicular to the axial direction of the rotor body. The venting groove may be formed linearly or in a curved shape. The venting groove may extend substantially from a center of the front surface to the outer circumference of the front surface of the second ring-shaped end member. Accordingly, the venting groove may be in fluid communication with the ambient air as well.

The rotor body, the first ring-shaped end member and the second ring-shaped end member may be aligned with each other such that the venting channel formed in the rotor body, the venting hole formed in the first ring-shaped end member and the venting groove formed in the second ring-shaped end member may be connected to each other in order to form the venting duct. When rotating the rotor body around its axial direction, centrifugal force may be generated. The centrifugal force may cause a lower pressure inside the rotor assembly by releasing the airflow out of the rotor assembly. Thus, ambient air may be guided from the first ring-shaped end member to the second ring-shaped end member throughout the rotor body along the venting duct or from the second ring-shaped end member to the first ring-shaped end member throughout the rotor body along the venting duct. Simultaneously, a high velocity flow field may be generated at a proximity of an airgap- entrance radially and outwardly, wherein the airgap-entrance may work as a wall/air-curtain preventing oil-splash or mist from entering the airgap. Accordingly, the oil-contaminated air may be effectively removed before the air enters the venting duct and friction losses due to oil droplets may be avoided.

In an example, an inner end of the venting groove, which is arranged at the interior of the second ring-shaped end member, comprises a venting aperture. The venting aperture extends substantially parallel to the axial direction of the rotor body to abut on the venting channel. The venting groove extending from the interior to the outer circumference of the second ring-shaped end member may comprise the inner end and an outer end at the front surface of the second ring-shaped end member facing the rotor body.

The venting aperture may extend from the front surface to a rear surface of the second ring-shaped end member. In other words, the venting aperture may penetrate the second ring-shaped end member starting from the inner end. Preferably, the venting aperture may extend substantially parallel to the axial direction of the rotor body. The venting aperture may be arranged to be connected to the venting channel of the rotor body. The ambient air may enter the second ring-shaped end member via such venting aperture and it may be guided through the venting groove to outside without passing through the venting channel or the rotor body. Accordingly, the oil-contaminated air may be directly released at the second end portion of the rotor body without entering the rotor body.

In an example, the rotor assembly further comprises at least one fan unit. The fan unit is arranged at a rear surface of the first ring-shaped end member and/or at a rear surface of the second ring-shaped end member facing away from the rotor body. The fan unit may be adapted to constantly guide the airflow in the rotor assembly. Each of the first ring-shaped end member and the second ring-shaped end member may comprise the fan unit or only one of the first ring-shaped end member and the second ring-shaped end member may comprise the fan unit.

The fan unit may comprise an impeller with a plurality of blade elements. The fan unit may be arranged at the first ring-shaped end member and/or the second ring-shaped end member. The fan unit may be arranged at on opposite side of the rotor body relative to the first ring-shaped end member and/or the second ring-shaped end member.

The fan unit may be designed for an axial air intake in direction to the rotor body. In other words, the fan unit may be adapted to generate the airflow in direction to the rotor body to cool rotor magnets and stator windings. Thus, by incorporating the fan unit into the first ring-shaped end member and/or the second ring-shaped end member, the airflow may be provided in an extra dimension and at a high velocity.

In addition, the fan unit may be designed to provide the airflow in direction to the oil-contaminated air by aligning the impeller or its blade elements in a predetermined angle to draw air out of the rotor body. Accordingly, the oil-contaminated air may be kept away from the airgap.

In an example, the fan unit is integrated with the first ring-shaped end member and/or the second ring-shaped end member. The fan unit may be integrally formed with the first ring-shaped end member and/or the second ring-shaped end member facing away from the rotor body.

In an example, the fan unit is arranged separately from the first ring-shaped end member and/or the second ring-shaped end member. The fan unit may be separately formed from the first ring-shaped end member and mounted at the first ring-shaped end member facing away from the rotor body. Additionally or alternatively, the fan unit may be separately formed from the second ring-shaped end member and mounted at the second ring-shaped end member facing away from the rotor body.

In an example, a first fan unit may be integrally formed with the first ring-shaped end member and a second fan unit may be separately formed and mounted at the second ring-shaped end member. Alternatively, the second fan unit may be integrally formed with the second ring-shaped end member and the first fan unit may be separately formed and mounted at the first ring-shaped end member. Further, each of the first fan unit and the second fan unit may be integrally formed with the first ring-shaped end member and the second ring-shaped end member respectively or separately formed and mounted at the respective end member.

In an example, the venting groove may be formed in an arc shape. The arc shape of the venting groove is arranged along a rotational direction of the rotor body. The venting groove, which may be arranged at the front surface of the second ring-shaped end member and extend from the interior of the second ring-shaped end member to the outer circumference of the ring shaped second ring-shaped end member, may comprise a curved shape. The arc shape or the curved shape of the venting groove may be formed to comply with the rotational direction of the rotor body of the fan unit to effectively generate the centrifugal force and guide the airflow through the venting groove.

In an example, the venting hole of the first ring-shaped end member and/or the venting groove of the second ring-shaped end member are in fluid communication with ambient air. Specifically, the venting hole of the first ring-shaped end member and/or the venting aperture of the second ring-shaped end member may be adapted to be in fluid communication with the fan unit. The ambient air may be guided by the fan unit through the first ring-shaped end member and/or the second ring-shaped end member and capable to cool the rotor body and/or the stator windings. In addition, the ambient air may prevent the oil-contaminated air from introducing in the airgap between the outer surface of the rotor assembly and the inner stator surface and reduce or even eliminate friction losses inside the airgap.

In an example, the venting hole of the first ring-shaped end member is arranged as an air inlet or air outlet. By utilizing the fan unit at the first ring-shaped end member, the venting hole of the first ring-shaped end member may guide the airflow towards or out of the rotor body. In other words, the venting hole of the first ring-shaped end member may be adapted to axially guide the ambient air through the venting duct to the second ring-shaped end member or from the second ring-shaped end member to the first ring-shaped end member via the venting duct.

In an example, the second ring-shaped end member further comprises at least one venting opening extending from the front surface to the rear surface of the second ring-shaped end member, the venting opening is arranged as an air inlet and the venting groove is arranged as an air outlet. By utilizing the fan unit, the venting opening may guide the airflow towards the rotor body and the venting groove may guide the airflow out of the rotor body. The venting opening may also abut on the venting channel of the rotor body to form a venting duct to guide the airflow from the second ring-shaped end member to the first ring-shaped end member.

Accordingly, if the venting hole of the first ring-shaped end member may guide the airflow towards the rotor body by the fan unit, the venting groove may be able to draw the airflow out of the second ring-shaped end member due to the centrifugal force. Alternatively, if the venting opening of the second ring-shaped end member may guide the airflow towards the rotor body by the fan unit, the airflow may pass through the venting channel of the rotor body and it may be released out of the first ring-shaped end member via the venting hole.

In an example, the rotor body comprises a plurality of venting channels extending from the first end portion to the second end portion through the solid material portion of the rotor body. The first ring-shaped end member comprises a plurality of venting holes arranged substantially parallel to the axial direction of the rotor body. The second ring-shaped end member comprises a plurality of venting grooves in a radial direction of the second ring-shaped end member at the front surface of the second ring-shaped end member. The plurality of venting channels, the plurality of venting holes, and the plurality of venting grooves are connected to each other to form a plurality of venting ducts.

The rotor body comprising the plurality of the venting ducts facilitates direct cooling using oil-spray directed towards end-windings of the rotor assembly. Additionally, by providing the plurality of the venting ducts, a weight of the rotor assembly may be vastly reduced.

The plurality of venting channels may be arranged in the solid material portion of the rotor body along a circumferential direction of the rotor body. The plurality of the venting channels may extend in the axial direction of the rotor body. The plurality of venting channels may be spaced apart from each other.

The plurality of venting holes of the first ring-shaped end member may be formed from the front surface to the rear surface of the first ring-shaped end member, in other words substantially parallel to the axial direction of the rotor body. The plurality of venting holes may be arranged in a circumferential direction of the first ring-shaped end member.

The plurality of venting grooves of the second ring-shaped end member may extend from the interior of the second ring-shaped end member to the outer circumference of the second ring-shaped end member at the front surface of the second ring-shaped end member facing the rotor body. Each of the venting grooves may comprise a venting aperture extending substantially parallel to the axial direction of the rotor body. Alternatively, only a portion of the venting grooves may comprise a venting aperture and the remaining portion of the venting grooves may comprise no venting apertures. The venting grooves and the venting apertures may be arranged in a circumferential direction of the second ring-shaped end member.

The second ring-shaped end member may further comprise a plurality of venting openings. The venting openings may extend from the front surface to the rear surface of the second ring-shaped end member. The plurality of venting openings may be arranged in the circumferential direction of the second ring-shaped end member. Preferably, the venting grooves and the venting openings may be arranged alternately on the front surface of the second ring-shaped end member.

The plurality of venting channels may abut on the plurality of venting holes on one side and the plurality of venting grooves, and optionally the plurality of venting apertures on the other side to form the plurality of venting ducts, through which the airflow may be guided.

In an example, a number of the venting ducts is even. For instance, the number of venting ducts may be from 2, 4, 6, to 20. Such even number of venting ducts may ensure an even distribution of the air pressure inside the rotor assembly to effectively guide the airflow. The even number of venting ducts may refer to an even number of venting channels of the rotor body, an even number of venting holes of the first ring-shaped end member and an even number of venting grooves of the second ring-shaped end member. Optionally, the second ring-shaped end member may also comprise an even number of venting apertures and an even number of venting openings.

However, the number of venting grooves may not be same as the number of venting apertures. Also, the number of venting holes or venting openings may not be same as the number of venting grooves. For instance, the first ring-shaped end member may comprise 8 venting holes, whereas the second ring-shaped end member may comprise 4 venting openings, through which the airflow is guided in direction to the venting holes of the first ring-shaped end member via the venting channels. Further, another 4 venting holes of the first ring-shaped end member may guide the airflow in direction to the venting grooves via the venting channels.

In an example, a half of the venting ducts is capable to guide the airflow from the first ring-shaped end member throughout the second ring-shaped end member and another half of the venting ducts is capable to guide the airflow from the second ring-shaped end member throughout the first ring-shaped end member. The venting ducts may be divided into two groups to guide the airflow in an opposite direction to each other. In other words, a half of the plurality of venting holes of the first ring-shaped end member may serve as the air inlet and another half of the venting holes of the first ring-shaped end member may serve as the air outlet. Further, the plurality of venting openings of the second ring-shaped end member may serve as the air inlet and the venting grooves of the second ring-shaped end member may serve as the air outlet.

Guiding the airflow towards the rotor body may be facilitated by providing the fan unit at each of the first ring-shaped end member and the second ring-shaped end member. Preferably, the venting ducts may be arranged such that the adjacent venting ducts of an individual venting duct may guide the airflow in an opposite direction relative to the individual venting duct. In other words, the airflow is guided in the venting ducts in an alternate direction along the circumferential direction of the rotor body.

In an example, the rotor body comprises a stack of rotor elements. The rotor body may comprise a plurality of disc-shaped laminations or rotor elements arranged in a stack. Each of the laminations may comprise a plurality of a magnetic material arranged in a circumferential direction of the disc-shaped lamination. The plurality of disc-shaped laminations may form the solid material portion of the rotor body, which may comprise one or more venting channels extending in the axial direction of the rotor body. Accordingly, efficient cooling of the rotor assembly may be achieved and the weight of the rotor assembly may be reduced. Further, the oil-contaminated air may be prevented from entering in the airgap between the outer surface of the rotor assembly and the inner stator surface.

According to the present disclosure, an electric machine is also presented. The electric machine comprises a rotor assembly as described above and a stator assembly arranged around the rotor assembly. The electric machine may be a wet machine, which may utilize an oil as a cooling medium.

It should be noted that the above examples may be combined with each other within the scope of the claims.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1a and 1b: show schematically an example of a rotor assembly not according to thepresent invention.
- Fig. 2a and 2b: show schematically an example of a second ring-shaped end member of a rotor assembly not according to the present invention.
- Fig. 3a and 3b: show schematically an example of a second ring-shaped end member of a rotor assembly according to the present invention.
- Fig. 4a and 4b: show schematically an example of a second ring-shaped end member of a rotor assembly not according to the present invention
- Fig. 5a, 5b and 5c: show schematically an example of a second ring-shaped end member of a rotor assembly not according to the present invention.

### DESCRIPTION OF EXAMPLES

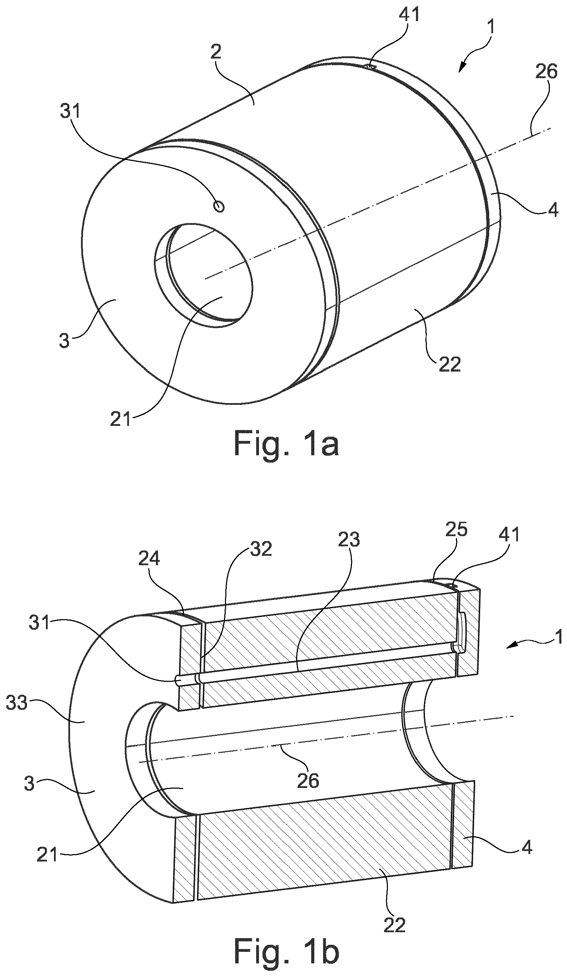

Fig. 1a shows a rotor assembly 1 for an electric machine (not shown). The rotor assembly 1 may be adapted for an electric machine, which may be arranged, for instance, in a vehicle such as a battery electric vehicle (BEV) or a hybrid electric vehicle (HEV) to provide kinetic energy to wheels of the vehicle. The rotor assembly 1 may be arranged coaxially inside a stator assembly (not shown) and configured to rotate around a longitudinal axis of the electric machine. In particular, the rotor assembly 1 may be adapted for a wet electric machine, which may utilize an oil as a cooling medium. The oil may be any lubricant, which may be adapted to reduce friction and heat between surfaces in mutual contact.

The rotor assembly 1 comprises a rotor body 2, a first ring-shaped end member 3 and a second ring-shaped end member 4. The rotor body 2 is formed in a cylinder shape comprising a through-hole 21 extending in an axial direction 26 of the rotor body 2, a solid material portion 22 and at least one venting channel 23. Preferably, the rotor body 2 may comprise a stack of disc-shaped rotor elements. The plurality of disc-shaped rotor elements or laminations form the solid material portion 22 of the rotor body 2, which comprises at least one venting channel 23 extending in the axial direction 26 of the rotor body 2. However, the rotor body 2 may comprise several venting channels 23 arranged in a circumferential direction of the rotor body 2.

The first ring-shaped end member 3 and the second ring-shaped end member 4 are ring shaped. The first ring-shaped end member 3 is arranged at a first end portion 24 of the rotor body 2. The second ring-shaped end member 4 is arranged at a second end portion 25 of the rotor body 2 (see also Fig. 1b).

As shown in Fig. 1b, the first ring-shaped end member 3 comprises at least one venting hole 31 arranged substantially parallel to the axial direction 26 of the rotor body 2 and extending from a front surface 32 to a rear surface 33 of the first ring-shaped end member 3. The front surface 32 of the first ring-shaped end member 3 faces the rotor body 2 and the rear surface 33 of the first ring-shaped end member 3 faces away from the rotor body 2.

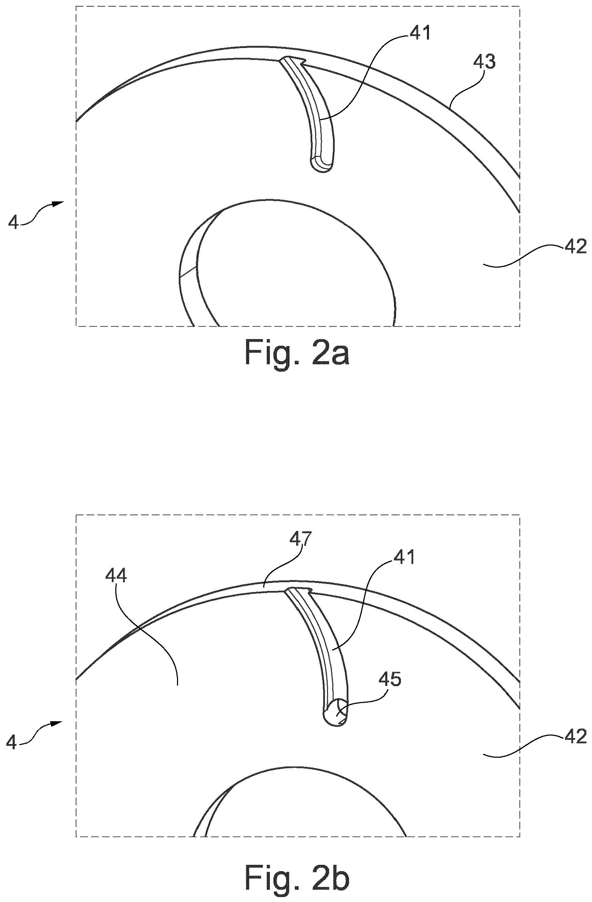

Fig. 2a shows the second ring-shaped end member 4 comprising at least one venting groove 41 at a front surface 42 of the second ring-shaped end member 4. The front surface 42 of the second ring-shaped end member 4 faces the rotor body 2 and a rear surface 43 of the second ring-shaped end member 4 faces away from the rotor body 2. The venting groove 41 extends from an interior 44 of the second ring-shaped end member 4 to an outer circumference 47 of the second ring-shaped end member 4. The venting groove 41 may be formed in an arc shape or extend linearly.

Optionally, the venting groove 41 of the second ring-shaped end member 4 comprises a venting aperture 45 arranged at an inner end of the venting groove 41, which is arranged at the interior 44 of the second ring-shaped end member 4, as shown in Fig. 2b. The venting aperture 45 extends substantially parallel to the axial direction 26 of the rotor body 2 to abut on the venting channel 23.

As shown in Fig. 1b, the venting channel 23, the venting hole 31 and the venting groove 41 are connected to each other to form a venting duct for guiding airflow throughout the rotor body 2.

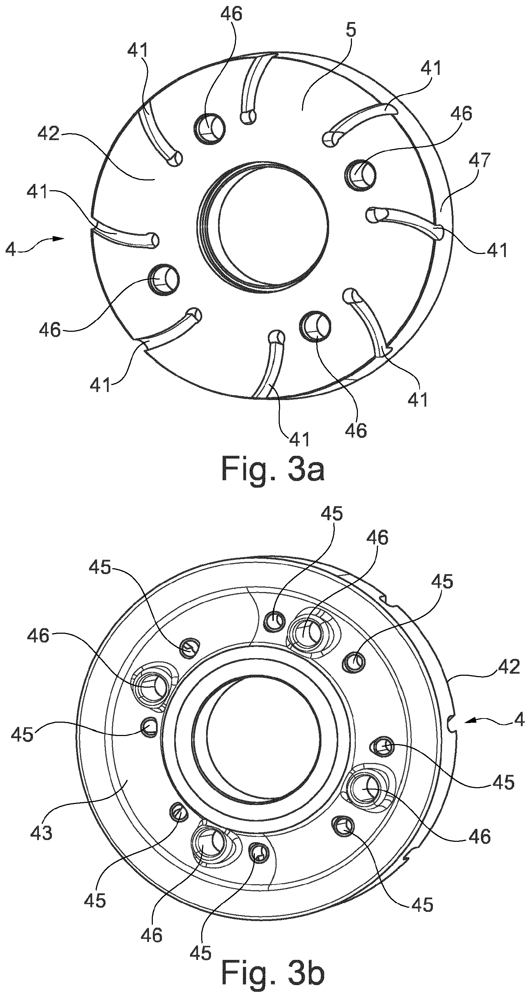

Fig. 3a shows the front surface 42 of the second ring-shaped end member 4. The second ring-shaped end member 4 comprises a plurality of venting grooves 41 arranged in a circumferential direction of the second ring-shaped end member 4 at the front surface 42 of the second ring-shaped end member 4. Fig. 3b shows the rear surface 43 of such second ring-shaped end member 4.

The rotor body 2 comprises a plurality of venting channels 23 extending from the first end portion 24 to the second end portion 25 through the solid material portion 22 of the rotor body 2 and the first ring-shaped end member 3 comprises a plurality of venting holes 31 arranged substantially parallel to the axial direction 26 of the rotor body 2. Thus, the plurality of venting channels 23, the plurality of venting holes 31, and the plurality of venting grooves 41 can be connected to each other to form a plurality of venting ducts.

The rotor assembly 1 further comprises at least one fan unit (not shown). The fan unit is adapted to constantly guide the airflow in the rotor assembly 1 and arranged at the rear surface 33 of the first ring-shaped end member 3 and/or at the rear surface 43 of the second ring-shaped end member 4. The fan unit can be arranged separately from the first ring-shaped end member 3 and/or the second ring-shaped end member 4 or integrally formed with the first ring-shaped end member 3 and/or the second ring-shaped end member 4. The venting holes 31 of the first ring-shaped end member 3 and/or the venting grooves 41 of the second ring-shaped end member 4 are in fluid communication with ambient air via the fan unit.

The venting hole 31 of the first ring-shaped end member 3 can be arranged as an air inlet or air outlet. As shown in Fig. 3a and Fig. 3b, the second ring-shaped end member 4 further comprises a plurality of venting openings 46 extending from the front surface 42 to the rear surface 43 of the second ring-shaped end member 4. The venting openings 46 are arranged as an air inlet and the venting grooves 41 are arranged as an air outlet.

Accordingly, if the venting holes 31 of the first ring-shaped end member 3 guide the airflow towards the rotor body 2 by the fan unit, the venting grooves 41 may be able to draw the airflow out of the second ring-shaped end member 4 due to the centrifugal force. Additionally or alternatively, if the venting openings 46 of the second ring-shaped end member 4 guide the airflow towards the rotor body 2 by the fan unit, the airflow may pass through the venting channels 23 of the rotor body 2 and it can be released out of the first ring-shaped end member 3 via the venting holes 31.

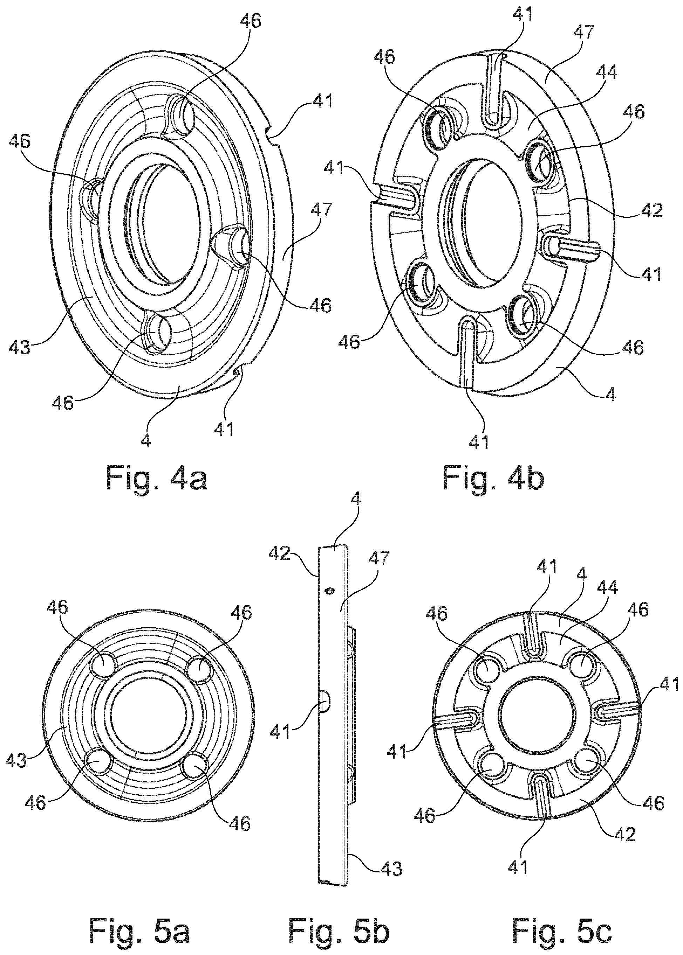

Fig. 4a, Fig. 4b, Fig. 5a, Fig. 5b and Fig. 5c show an alternative example of the second ring-shaped end member 4. As shown in Fig. 4a and Fig. 5a, the rear surface 43 of such second ring-shaped end member 4 comprises a plurality of venting openings 46 arranged as an air inlet penetrating the second ring-shaped end member 4 substantially parallel to the axial direction 26 of the rotor body 2.

Fig. 4b and Fig. 5c show the front surface 42 of the second ring-shaped end member 4 comprising a plurality of venting openings 46 and a plurality of venting grooves 41 arranged in the circumferential direction of the second ring-shaped end member 4. As shown in Fig. 5b, the venting groove 41 arranged at the front surface 42 of the second ring-shaped end member 4 extends from an interior 44 of the second ring-shaped end member 4 to the outer circumference 47 of the second ring-shaped end member 4.

Accordingly, the ambient air may prevent the oil-contaminated air from introducing in the airgap between an outer surface of the rotor assembly 1 and an inner stator surface and reduce or even eliminate friction losses inside the airgap. Further, by providing the venting ducts, a total weight of the rotor assembly 1 may be reduced.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed, provided that this is within the scope of the claims. However, all features can be combined, provided that this is within the scope of the claims, providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A ring-shaped end member (4) for a rotor assembly (1), comprising,
a plurality of venting grooves (41),
a plurality of venting openings (46),
a front surface (42) and a rear surface (43),
each venting groove (41) extending from an interior (44) to an outer circumference (47) at the front surface (42), an inner end of the venting groove (41) being arranged at the interior (44) of the ring-shaped end member (4) and comprising a venting aperture (45),
the venting apertures (45) extending from the front surface (24) to the rear surface (43) and
each venting opening (46) extending from the front surface (24) to the rear surface (43),
the venting grooves (41) and the venting openings (46) being in fluid communication with ambient air;
wherein the venting openings (46) are not directly connected to any venting grooves (41).

2. The ring-shaped end member (4) according to claim 1, the venting grooves (41), venting apertures (45) and the venting openings (46) being arranged in a circumferential direction of the ring-shaped end member (4).

3. A rotor assembly (1), comprising
- a rotor body (2),
- a first ring-shaped end member (3), and
- a second ring-shaped end member (4) being a ring-shaped end member (4) according to any of the preceding claim 1 or 2,
the rotor body (2) being formed in a cylinder shape comprising a through-hole (21) extending in an axial direction (26) of the rotor body (2), a solid material portion (22) and at least one venting channel (23),
the first ring-shaped end member (3) being arranged at a first end portion (24) of the rotor body (2),
the second ring-shaped end member (4) being arranged at a second end portion (25) of the rotor body (2),
the venting channel (23) extending from the first end portion (24) to the second end portion (25) through the solid material portion (22) of the rotor body (2),
the first ring-shaped end member (3) comprising at least one venting hole (31) arranged substantially parallel to the axial direction (26) of the rotor body (2), the front surface (42) of the second ring-shaped end member (4) facing the rotor body (2),
and
the venting channel (23), the venting hole (31) and the venting grooves (41) being connected to each other to form a venting duct for guiding an airflow throughout the rotor body (2).

4. The rotor assembly (1) according to claim 3, the venting aperture (45) extending substantially parallel to the axial direction (26) of the rotor body (2) to abut on the venting channel (23).

5. The rotor assembly (1) according to claim 3 or 4, further comprising at least one fan unit, the fan unit being arranged at a rear surface (33) of the first ring-shaped end member (3) and/or at a rear surface (43) of the second ring-shaped end member (4) facing away from the rotor body (2).

6. The rotor assembly (1) according to claim 5, the fan unit being integrated in the first ring-shaped end member (3) and/or in the second ring-shaped end member (4) or the fan unit being arranged separately from the first ring-shaped end member (3) and/or the second ring-shaped end member (4).

7. The rotor assembly (1) according to any of the preceding claims 3 to 6, the venting hole (31) of the first ring-shaped end member (3) and/or the venting groove (41) of the second ring-shaped end member (4) being in fluid communication with ambient air.

8. The rotor assembly (1) according to the preceding claim, the venting hole (31) of the first ring-shaped end member (3) being arranged as an air inlet or air outlet.

9. The rotor assembly (1) according to any of the preceding claims 3 to 8, the venting opening (46) being arranged as an air inlet and the venting groove (41) being arranged as an air outlet.

10. The rotor assembly (1) according to any of the preceding claims 3 to 9,
the rotor body (2) comprising a plurality of venting channels (23) extending from the first end portion (24) to the second end portion (25) through the solid material portion (22) of the rotor body (2),
the first ring-shaped end member (3) comprising a plurality of venting holes (31) arranged substantially parallel to the axial direction (26) of the rotor body (2), and
the plurality of venting channels (23), the plurality of venting holes (31), and the plurality of venting grooves (41) being connected to each other to form a plurality of venting ducts.

11. The rotor assembly (1) according to the preceding claim, a number of the venting ducts being even.

12. The rotor assembly (1) according to the preceding claim, a half of the venting ducts being capable to guide the airflow from the first ring-shaped end member (3) throughout the second ring-shaped end member (4) and another half of the venting ducts being capable to guide the airflow from the second ring-shaped end member (4) throughout the first ring-shaped end member (3).

13. The rotor assembly (1) according to any of the preceding claims 3 to 12, the rotor body (2) comprising a stack of rotor elements.

14. An electric machine, the electric machine comprising a rotor assembly (1) according to any of the preceding claims 3 to 13 and a stator assembly arranged around the rotor assembly (1).

## Patentansprüche

1. Ringförmiges Endteil (4) für eine Rotoranordnung (1), umfassend:
eine Mehrzahl von Entlüftungsnuten (41),
eine Mehrzahl von Entlüftungsöffnungen (46),
eine Vorderseite (42) und eine Rückseite (43),
wobei sich jede Entlüftungsnut (41) an der Vorderseite (42) von einem Innenbereich (44) zu einem Außenumfang (47) erstreckt, wobei ein inneres Ende der Entlüftungsnut (41) an dem Innenbereich (44) des ringförmigen Endteils (4) angeordnet ist und eine Entlüftungsöffnung (45) umfasst,
wobei sich die Entlüftungsöffnungen (45) von der Vorderseite (24) zur Rückseite (43) erstrecken, und
wobei sich jede Entlüftungsöffnung (46) von der Vorderseite (24) zur Rückseite (43) erstreckt,
wobei die Entlüftungsnuten (41) und die Entlüftungsöffnungen (46) in Fluidverbindung mit der Umgebungsluft stehen;
wobei die Entlüftungsöffnungen (46) nicht direkt mit Entlüftungsnuten (41) verbunden sind.

2. Ringförmiges Endteil (4) nach Anspruch 1,
wobei die Entlüftungsnuten (41), Entlüftungsöffnungen (45) und die Entlüftungsöffnungen (46) in einer Umfangsrichtung des ringförmigen Endteils (4) angeordnet sind.

3. Rotoranordnung (1), umfassend
- einen Rotorkörper (2),
- ein erstes ringförmiges Endteil (3), und
- ein zweites ringförmiges Endteil (4), wobei dieses ein ringförmiges Endteil (4) nach einem der vorhergehenden Ansprüche 1 oder 2 handelt,
wobei der Rotorkörper (2) zylinderförmig ausgebildet ist und ein sich in einer Axialrichtung (26) des Rotorkörpers (2) erstreckendes Durchgangsloch (21), einen Massivmaterialabschnitt (22) und mindestens einen Entlüftungskanal (23) umfasst,
wobei das erste ringförmige Endteil (3) an einem ersten Endabschnitt (24) des Rotorkörpers (2) angeordnet ist,
wobei das zweite ringförmige Endteil (4) an einem zweiten Endabschnitt (25) des Rotorkörpers (2) angeordnet ist,
wobei sich der Entlüftungskanal (23) durch den Massivmaterialabschnitt (22) des Rotorkörpers (2) vom ersten Endabschnitt (24) zum zweiten Endabschnitt (25) erstreckt,
wobei das erste ringförmige Endteil (3) mindestens ein im Wesentlichen parallel zur Axialrichtung (26) des Rotorkörpers (2) angeordnetes Entlüftungsloch (31) umfasst, wobei die Vorderseite (42) des zweiten ringförmigen Endteils (4) dem Rotorkörper (2) zugewandt ist,
und
wobei der Entlüftungskanal (23), das Entlüftungsloch (31) und die Entlüftungsnuten (41) miteinander verbunden sind, um einen Entlüftungskanal zum Führen eines Luftstroms durch den gesamten Rotorkörper (2) zu bilden.

4. Rotoranordnung (1) nach Anspruch 3, wobei sich die Entlüftungsöffnung (45) im Wesentlichen parallel zur Axialrichtung (26) des Rotorkörpers (2) erstreckt, um an dem Entlüftungskanal (23) anzuliegen.

5. Rotoranordnung (1) nach Anspruch 3 oder 4, ferner umfassend mindestens eine Lüftereinheit, wobei die Lüftereinheit an einer Rückseite (33) des ersten ringförmigen Endteils (3) und/oder an einer Rückseite (43) des zweiten ringförmigen Endteils (4), die von dem Rotorkörper (2) abgewandt ist, angeordnet ist.

6. Rotoranordnung (1) nach Anspruch 5, wobei die Lüftereinheit in das erste ringförmige Endteil (3) und/oder in das zweite ringförmige Endteil (4) integriert ist oder wobei die Lüftereinheit getrennt von dem ersten ringförmigen Endteil (3) und/oder dem zweiten ringförmigen Endteil (4) angeordnet ist.

7. Rotoranordnung (1) nach einem der vorhergehenden Ansprüche 3 bis 6, wobei das Entlüftungsloch (31) des ersten ringförmigen Endteils (3) und/oder die Entlüftungsnut (41) des zweiten ringförmigen Endteils (4) in Fluidverbindung mit der Umgebungsluft steht.

8. Rotoranordnung (1) nach dem vorhergehenden Anspruch, wobei das Entlüftungsloch (31) des ersten ringförmigen Endteils (3) als Lufteinlass oder Luftauslass angeordnet ist.

9. Rotoranordnung (1) nach einem der vorhergehenden Ansprüche 3 bis 8, wobei die Entlüftungsöffnung (46) als Lufteinlass und die Entlüftungsnut (41) als Luftauslass angeordnet sind.

10. Rotoranordnung (1) nach einem der vorhergehenden Ansprüche 3 bis 9,
wobei der Rotorkörper (2) eine Mehrzahl von Entlüftungskanälen (23) umfasst, die sich durch den Massivmaterialabschnitt (22) des Rotorkörpers (2) vom ersten Endabschnitt (24) zum zweiten Endabschnitt (25) erstrecken,
wobei das erste ringförmige Endteil (3) eine Mehrzahl von im Wesentlichen parallel zur Axialrichtung (26) des Rotorkörpers (2) angeordneten Entlüftungslöchern (31) umfasst,
und
wobei die Mehrzahl von Entlüftungskanälen (23), die Mehrzahl von Entlüftungslöchern (31) und die Mehrzahl von Entlüftungsnuten (41) miteinander verbunden sind, um eine Mehrzahl von Entlüftungskanälen zu bilden.

11. Rotoranordnung (1) nach dem vorhergehenden Anspruch, wobei eine Anzahl der Entlüftungskanäle gerade ist.

12. Rotoranordnung (1) nach dem vorhergehenden Anspruch, wobei eine Hälfte der Entlüftungskanäle in der Lage ist, den Luftstrom vom ersten ringförmigen Endteil (3) durch das zweite ringförmige Endteil (4) zu leiten, und eine andere Hälfte der Entlüftungskanäle in der Lage ist, den Luftstrom vom zweiten ringförmigen Endteil (4) durch das erste ringförmige Endteil (3) zu leiten.

13. Rotoranordnung (1) nach einem der vorhergehenden Ansprüche 3 bis 12, wobei der Rotorkörper (2) einen Stapel von Rotorelementen umfasst.

14. Elektrische Maschine, wobei die elektrische Maschine eine Rotoranordnung (1) nach einem der vorhergehenden Ansprüche 3 bis 13 und eine Statoranordnung umfasst, die um die Rotoranordnung (1) herum angeordnet ist.

## Revendications

1. Élément d'extrémité en forme d'anneau (4) pour un ensemble de rotor (1), comprenant,
une pluralité de rainures de mise à l'air (41),
une pluralité d'ouvertures de mise à l'air (46),
une surface avant (42) et une surface arrière (43),
chaque rainure de mise à l'air (41) s'étendant d'un intérieur (44) à une circonférence extérieure (47) au niveau de la surface avant (42), une extrémité intérieure de la rainure de mise à l'air (41) étant située à l'intérieur (44) de l'élément d'extrémité en forme d'anneau (4) et comprenant un orifice de mise à l'air (45),
les orifices de mise à l'air (45) s'étendant de la surface avant (24) à la surface arrière (43) et
chaque ouverture de mise à l'air (46) s'étendant de la surface avant (24) jusqu'à la surface arrière (43),
les rainures de mise à l'air (41) et les ouvertures de mise à l'air (46) étant en communication fluidique avec l'air ambiant ;
les ouvertures de mise à l'air (46) n'étant reliées directement à aucune rainure de mise à l'air (41).

2. Élément d'extrémité en forme d'anneau (4) selon la revendication 1,
les rainures de mise à l'air (41), les orifices de mise à l'air
(45) et les ouvertures de mise à l'air (46) étant situés dans une direction circonférentielle de l'élément d'extrémité en forme d'anneau (4).

3. Ensemble de rotor (1), comprenant
- un corps de rotor (2),
- un premier élément d'extrémité en forme d'anneau (3), et
- un second élément d'extrémité en forme d'anneau (4) qui est un élément d'extrémité en forme d'anneau (4) selon l'une quelconque des revendications précédentes 1 ou 2,
le corps de rotor (2) prenant une forme cylindrique comprenant un trou traversant (21) s'étendant dans une direction axiale (26) du corps de rotor (2), une partie de matériau solide (22) et au moins un canal de mise à l'air (23),
le premier élément d'extrémité en forme d'anneau (3) étant situé au niveau d'une première partie d'extrémité (24) du corps de rotor (2),
le second élément d'extrémité en forme d'anneau (4) étant situé au niveau d'une seconde partie d'extrémité (25) du corps de rotor (2),
le canal de mise à l'air (23) s'étendant de la première partie d'extrémité (24) à la seconde partie d'extrémité (25) à travers la partie de matériau solide (22) du corps de rotor (2),
le premier élément d'extrémité en forme d'anneau (3) comprenant au moins un trou de mise à l'air (31) situé sensiblement parallèlement à la direction axiale (26) du corps de rotor (2), la surface avant (42) du second élément d'extrémité en forme d'anneau (4) faisant face au corps de rotor (2),
et
le canal de mise à l'air (23), le trou de mise à l'air (31) et les rainures de mise à l'air (41) étant reliés les uns aux autres pour former un conduit de mise à l'air destiné à guider un flux d'air à travers le corps de rotor (2).

4. Ensemble de rotor (1) selon la revendication 3, l'orifice de mise à l'air (45) s'étendant sensiblement parallèlement à la direction axiale (26) du corps de rotor (2) pour venir en butée sur le canal de mise à l'air (23).

5. Ensemble de rotor (1) selon la revendication 3 ou 4, comprenant en outre au moins une unité de ventilateur, l'unité de ventilateur étant située au niveau d'une surface arrière (33) du premier élément d'extrémité en forme d'anneau (3) et/ou au niveau d'une surface arrière (43) du second élément d'extrémité en forme d'anneau (4) tournée à l'opposé du corps de rotor (2).

6. Ensemble de rotor (1) selon la revendication 5, l'unité de ventilateur étant intégrée dans le premier élément d'extrémité en forme d'anneau (3) et/ou dans le second élément d'extrémité en forme d'anneau (4) ou l'unité de ventilateur étant située séparément du premier élément d'extrémité en forme d'anneau (3) et/ou du second élément d'extrémité en forme d'anneau (4).

7. Ensemble de rotor (1) selon l'une quelconque des revendications précédentes 3 à 6, le trou de mise à l'air (31) du premier élément d'extrémité en forme d'anneau (3) et/ou la rainure de mise à l'air (41) du second élément d'extrémité en forme d'anneau (4) étant en communication fluidique avec l'air ambiant.

8. Ensemble de rotor (1) selon la revendication précédente, le trou de mise à l'air (31) du premier élément d'extrémité en forme d'anneau (3) étant situé comme une entrée d'air ou une sortie d'air.

9. Ensemble de rotor (1) selon l'une quelconque des revendications précédentes 3 à 8, l'ouverture de mise à l'air (46) étant située comme une entrée d'air et la rainure de mise à l'air (41) étant située comme une sortie d'air.

10. Ensemble de rotor (1) selon l'une quelconque des revendications précédentes 3 à 9,
le corps de rotor (2) comprenant une pluralité de canaux de mise à l'air (23) s'étendant de la première partie d'extrémité (24) à la seconde partie d'extrémité (25) à travers la partie de matériau solide (22) du corps de rotor (2),
le premier élément d'extrémité en forme d'anneau (3) comprenant une pluralité de trous de mise à l'air (31) situés sensiblement parallèlement à la direction axiale (26) du corps de rotor (2),
et
la pluralité de canaux de mise à l'air (23), la pluralité de trous de mise à l'air (31) et la pluralité de rainures de mise à l'air (41) étant reliées les unes aux autres pour former une pluralité de canaux de mise à l'air.

11. Ensemble de rotor (1) selon la revendication précédente, les conduits de mise à l'air étant en nombre pair.

12. Ensemble de rotor (1) selon la revendication précédente, une moitié des conduits de mise à l'air pouvant guider le flux d'air provenant du premier élément d'extrémité en forme d'anneau (3) à travers le second élément d'extrémité en forme d'anneau (4) et une autre moitié des conduits de mise à l'air pouvant guider le flux d'air provenant du second élément d'extrémité en forme d'anneau (4) à travers le premier élément d'extrémité en forme d'anneau (3).

13. Ensemble de rotor (1) selon l'une quelconque des revendications précédentes 3 à 12, le corps de rotor (2) comprenant un empilement d'éléments de rotor.

14. Machine électrique, la machine électrique comprenant un ensemble de rotor (1) selon l'une quelconque des revendications précédentes 3 à 13 et un ensemble de stator situé autour de l'ensemble de rotor (1).
